# EUROPEAN PATENT APPLICATION

(11) **EP 1 675 016 A2**
(43) Date of publication of application: **28.06.2006**
(21) Application number: 05111617.6
(22) Date of filing: 02.12.2005
(51) Int. Cl.: G06F 17/00, G11B 27/00, H04N 5/76

(54) **Picture reproducing apparatus, network system and picture reproducing method**

(30) Priority: 27.12.2004 JP 2004378143
(71) Applicant: Kabushi Kaisha Toshiba, Tokyo 105-8001 (JP)
(72) Inventor: Kawada, Yutaka, Toshiba Corporation, Minato-ku, Tokyo 105-8001 (JP)
(74) Representative: Henkel, Feiler & Hänzel

(57) **Abstract**

A picture reproducing apparatus includes a buffer (11) which temporarily holds picture contents input the apparatus (10A), an acquiring circuit (16A) to select one added contents from a plurality of different added contents concerning the picture contents held in the buffer (11) based on conditions preset in the apparatus (10A), and to acquire the selected added contents, and a reproducing circuit (12, 13, 15) to mix the acquired added contents with the picture contents held in the buffer (11), and reproduce the mixed contents as picture signals.

## Description

The present invention relates to a picture reproducing apparatus which reproduces picture contents to be reproduced together with added contents concerning picture contents provided from a server, and to a network system and a picture reproducing method.

In recent years, in a picture reproducing system, there is a picture reproducing apparatus which reproduces picture contents from a storage medium such as a Digital Versatile Disk (DVD) and also reproduces added contents concerning picture contents provided from a server.

In this type of picture reproducing apparatus, an address (URL) required to connect to a server on the Internet is added in picture contents recorded in a storage medium, and the server is accessed to acquire added contents when a viewer performs a predetermined operation to requests acquisition of the added contents provided from the server (see, for example, Document 1: Jpn. Pat. Appln. KOKAI Publication No. 2000-20535).

The picture reproducing apparatus is very convenient since picture contents recorded in a storage medium and contents provided from the server can be simultaneously viewed. However, when contents from the server must be displayed, a viewer needs an accessing operation with respect to the server each time, thereby increasing the burden on the user. In particular, in the video reproducing apparatus, there is an in-vehicle type or portable type picture reproducing apparatus, forcing a user to perform a manual operation during driving or moving may lead to a dangerous situation.

Further, contents can be provided from a server in the Internet to respective viewers owing storage media under the same conditions. However, there are contents which vary with time or have an age limit, and hence fine-tuned services are strongly demanded in accordance with each viewer or a use status.

Therefore, it is an object of the present invention to provide a picture reproducing apparatus, a network system and a picture reproducing method which allow acquisition of added contents according to a viewer or a use status without requiring a manual operation of the viewer and thereby achieve an improvement in entertaining properties for the viewer and an increase in utilization of services.

According to an aspect of the present invention, there is provided a picture reproducing apparatus comprising: a buffer which temporarily holds picture contents input the apparatus; an acquiring circuit to select one added contents from a plurality of different added contents concerning the picture contents held in the buffer based on conditions preset in the apparatus, and to acquire the selected added contents; and a reproducing circuit to mix the acquired added contents with the picture contents held in the buffer, and reproduce the mixed contents as picture signals.

According to another aspect of the present invention, there is provided a network system comprising: a server apparatus; a picture reproducing apparatus which is connected with the server apparatus through a network, and reproduces picture contents to which connection information for the server apparatus is added, the picture reproducing apparatus including: a buffer which temporarily holds picture contents input the picture reproducing apparatus; an accessing circuit to extract the connection information added to the picture contents held in the buffer, and access the server apparatus based on the connection information; and a reproducing circuit to mix the picture contents held in the buffer with added contents concerning the picture contents transmitted from the server, and reproduce the mixed contents as picture signals, the server apparatus including: a transmitter which transmits added contents meeting preset conditions in a plurality of different added contents to the picture reproducing apparatus when it is accessed by the picture reproducing apparatus.

According to yet another aspect of the present invention, there is provided a picture reproducing method comprising: temporarily holding input picture contents in a buffer; selecting one added contents from a plurality of different added contents concerning the picture contents held in the buffer based on preset conditions, and acquiring the selected added contents; and mixing the acquired added contents with the picture contents held in the buffer, and reproducing the mixed contents as picture signals.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing a configuration of a network system in a first embodiment of the present invention;
FIG. 2 is a flowchart showing an operation procedure and its contents of a picture reproducing apparatus in the first embodiment;
FIG. 3 is a block diagram showing a configuration of a network system in a second embodiment of the present invention;
FIG. 4 is a flowchart showing an operation procedure and its contents of a picture reproducing apparatus in the second embodiment; and
FIG. 5 is a block diagram showing a configuration of a network system in a third embodiment of the present invention.

Embodiments according to the present invention will now be described in detail hereinafter with reference to the accompanying drawings.

### (First Embodiment)

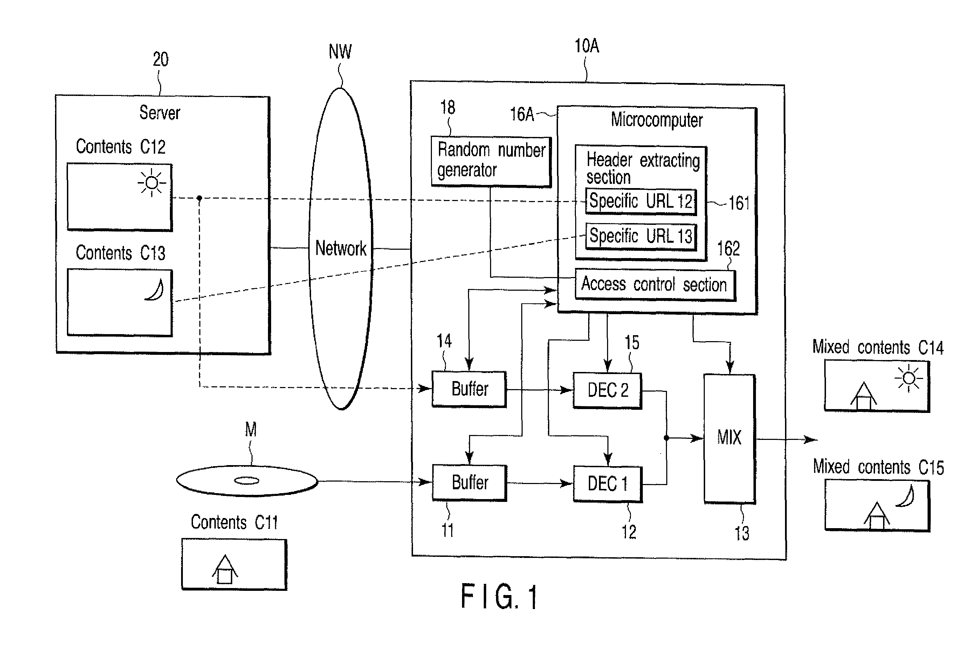

FIG. 1 is a block diagram showing a configuration of a network system in a first embodiment of the present invention, in which reference numeral 10A denotes a picture reproducing apparatus and 20 designates a server.

This picture reproducing apparatus 10A is connected with the server 20 through a network NW including a telephone/mobile phone public network or the Internet. It is assumed that picture contents C11 recorded in a storage medium M are supplied to the picture reproducing apparatus 10A and address information (specific URLs 12 and 13) required to connect to the server through the network NW is added in the picture contents C11.

The picture contents C11 are temporarily stored in a buffer 11, then decoded by a decoder (DEC 1) 12, and appropriately reproduced through a mixer (MIX) 13.

Furthermore, to the picture reproducing apparatus 10A are supplied contents C12 and C13 provided by the server 20. The contents C12 and C13 are temporarily stored in a buffer 14, and then decoded by a decoder (DEC 2) 15, and mixed with the picture contents C11 output from the decoder 12 by the mixer (MIX) 13 to be appropriately reproduced. In this manner, mixed contents C14 and C15 are reproduced.

These buffers 11 and 14, decoders 12 and 15 and mixer 13 are controlled by a microcomputer 16A. The microcomputer 16A is provided with a regular control function concerning a receiving/reproducing operation of contents as well as a header extracting section 161 and an access control section 162.

The header extracting section 161 extracts a header including the address information from the picture contents C11 stored in the buffer 11. The access control section 162 performs communication with the server 20 through the network NW, randomly selects the specific URLs 12 and 13 extracted by the header extracting section 161 based on an output from a random number generator 18, transmits a contents acquisition request to the server 20 by using the selected specific URLs 12 and 13, and receives the contents C12 and C13 transmitted from the server 20 in response to this acquisition request.

The random number generator 18 is used by the microcomputer 16A in order to select the specific URLs 12 and 13. In this embodiment, although the random number generator 18 is connected with the microcomputer 16A, a random number generating function may be realized in the microcomputer 16A without preparing the random number generator 18.

Moreover, the microcomputer 16A reads the picture contents C11 stored in the buffer 11 and the contents C12 and C13 stored in the buffer 14 in synchronization with each other, and respectively inputs them to the decoders 12 and 15.

The server 20 holds the contents C12 and C13 different from each other, and performs reception of a contents acquisition request fed from the picture reproducing apparatus 10A and transmission of the contents C12 and C13 held therein in accordance with this acquisition request.

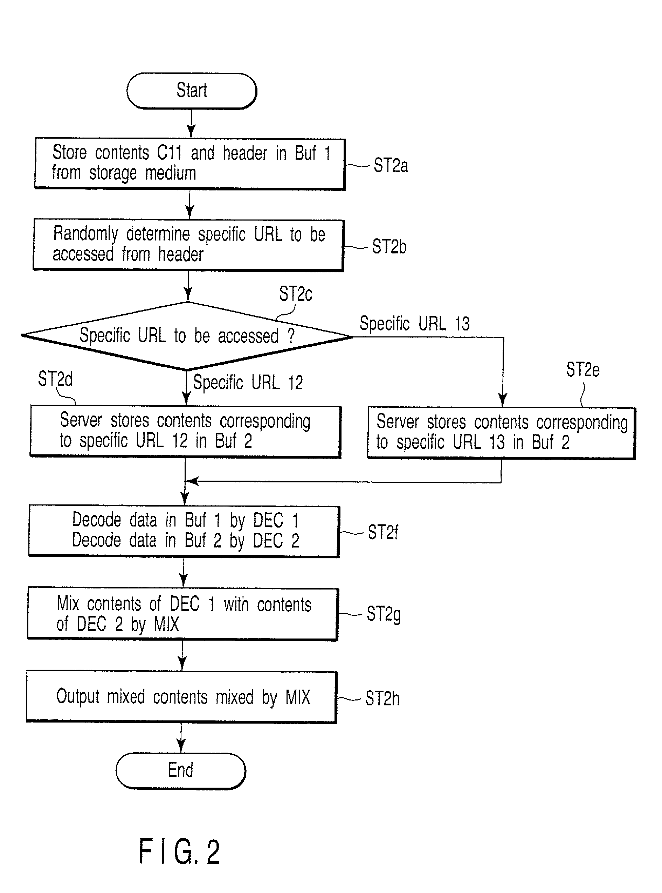

An operation of the thus configured network system will now be described. FIG. 2 is a flowchart showing an operation procedure and its contents of the picture reproducing apparatus 10A. Here, the buffer 11 is Buf 1 and the buffer 14 is Buf 2.

First, the picture contents C11 and a header are transferred from the storage medium M to the buffer 11 in the picture reproducing apparatus 10A in response to the request (step ST2a). In the header are written both the specific URL 12 and URL 13 as storage destinations of contents which must be reproduced together with the contents C11.

The microcomputer 16A in the picture reproducing apparatus 10A extracts the header stored in the buffer 11, uses the random number generator 18 to randomly determine a URL required to access the server 20 (step ST2b), and accesses each URL.

Here, when the URL 12 is selected as the specific URL, the microcomputer 16A jumps to step ST2d from step ST2c, and transmits a call signal for the server 20 to the network NW at this step. Additionally, when a communication link is established between itself and the server 20 with respect to this calling, the microcomputer 16A transmits a contents acquisition request to the server 20 through this communication link. This acquisition request includes the URL 12 corresponding to the contents C12 which are desired to be acquired.

On the other hand, the server 20 transmits the contents C12 corresponding to the specific URL 12 to the picture reproducing apparatus 10A which has issued the request through the established communication link.

The picture reproducing apparatus 10A receives the contents C12 transmitted from the server 20, and stores the received contents in the buffer 14.

On the other hand, when the URL 13 is selected as the specific URL, the microcomputer 16A jumps to step ST2e from the step ST2c, transmits a call signal for the server 20 to the network NW at this step, and then transmits a contents acquisition request to the server 20. This acquisition request includes the URL 13 corresponding to the contents C13 which are desired to be acquired.

On the other hand, the server 20 transmits the contents C13 corresponding to the specific URL 13 to the picture reproducing apparatus 10A which has issued the request through the established communication link.

The picture reproducing apparatus 10A receives the contents C13 transmitted from the server 20, and stores the received contents in the buffer 14.

Further, the microcomputer 16A in the picture reproducing apparatus 10A reads the picture contents C11 from the buffer 11 and inputs them to the decoder 12 in order to decode the contents, and also reads the contents C12 or the contents C13 from the buffer 14 and inputs them to the decoder 15 in order to decode the input contents (step ST2f).

Thereafter, the picture reproducing apparatus 10A uses the mixer 13 to mix the contents decoded by the decoder 12 with the contents decoded by the decoder 15 (step ST2g), and reproduces and displays mixed contents C14 or mixed contents C15 in a non-illustrated display unit (step ST2h).

As described above, according to the first embodiment, in the picture reproducing apparatus 10A, the picture contents C11 input from the storage medium M are stored in the buffer 11, the header added to the picture contents C11 in the buffer 11 is extracted by the microcomputer 16A, the URLs 12 and 13 included in this header are randomly selected, and the contents C12 and C13 corresponding to the selected URLs 12 and 13 are acquired from the server 20.

Therefore, a user can automatically select and acquire the optimum contents C12 and C13 without manually obtaining the contents C12 and C13 from the server 20. Further, since the different contents C12 and C13 can be obtained every time the picture contents C11 are reproduced, the user can be entertained with the contents C12 and C13 having variations. On the other hand, dealers of the storage medium M and the picture reproducing apparatus 10A can increase the number of users.

### (Second Embodiment)

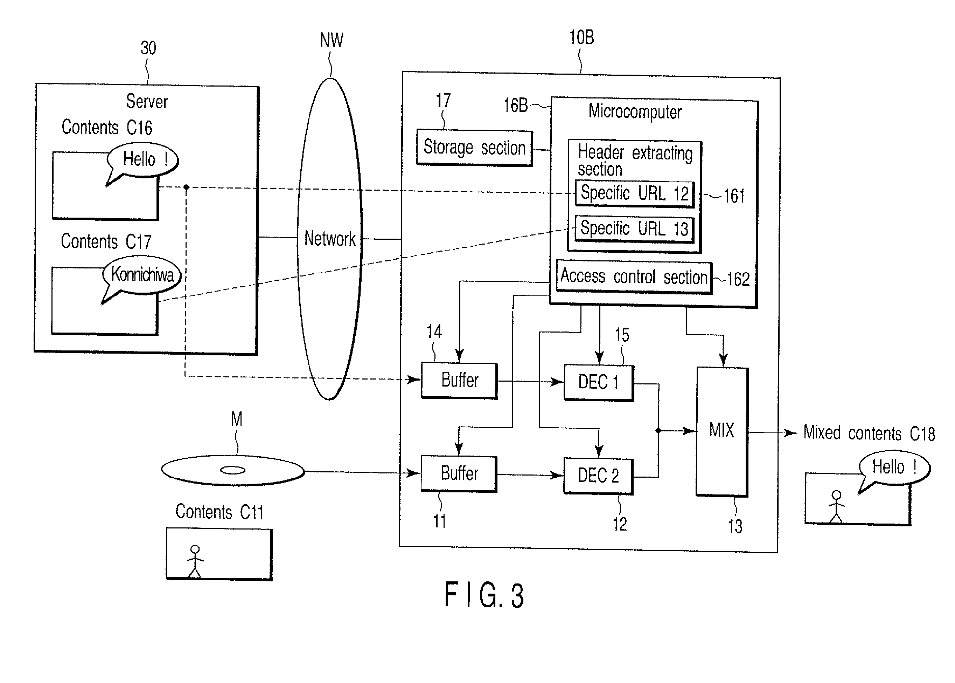

FIG. 3 is a block diagram showing a configuration of a network system in a second embodiment according to the present invention, in which reference numeral 10B denotes a picture reproducing apparatus and 30 designates a server. It is to be noted that, in FIG. 3, like reference numerals denote parts equal to those in FIG. 1, thereby eliminating the detailed explanation.

The server 30 holds contents C16 and C17 which differ in accordance with each region where reproduction is possible, and performs reception of a contents acquisition request transmitted from the picture reproducing apparatus 10B and transmission of the held contents C16 and C17 held in response to this acquisition request.

The picture reproducing apparatus 10B is provided with a storage section 17. That is, a microcomputer 16B stores and holds a region code in the storage section 17 when a registration command for the region code corresponding to desired contents is input.

Here, the region code means a code which restricts a region where a storage medium M can be reproduced, the region code exists in each of the picture reproducing apparatus 10B and the storage medium M, and the picture reproducing apparatus 10B can reproduce the storage medium M only when both the region codes match each other.

The microcomputer 16B compares a specific URL 12 for region code 1 (the region code for the U.S.) and a specific URL 13 for region code 2 (the region code for Japan) included in a header extracted from a buffer 11 with a registered region code stored and held in the storage section 17, transmits a contents acquisition request including the specific URL 12 corresponding to the matched region code to the server 30, receives the contents C16 transmitted from the server 30 in response to this acquisition request, and stores and holds the received contents.

It is to be noted that the contents C16 as an access destination of the specific URL 12 are contents including English sounds and the contents C17 as an access destination of the specific URL 13 are contents including Japanese sounds.

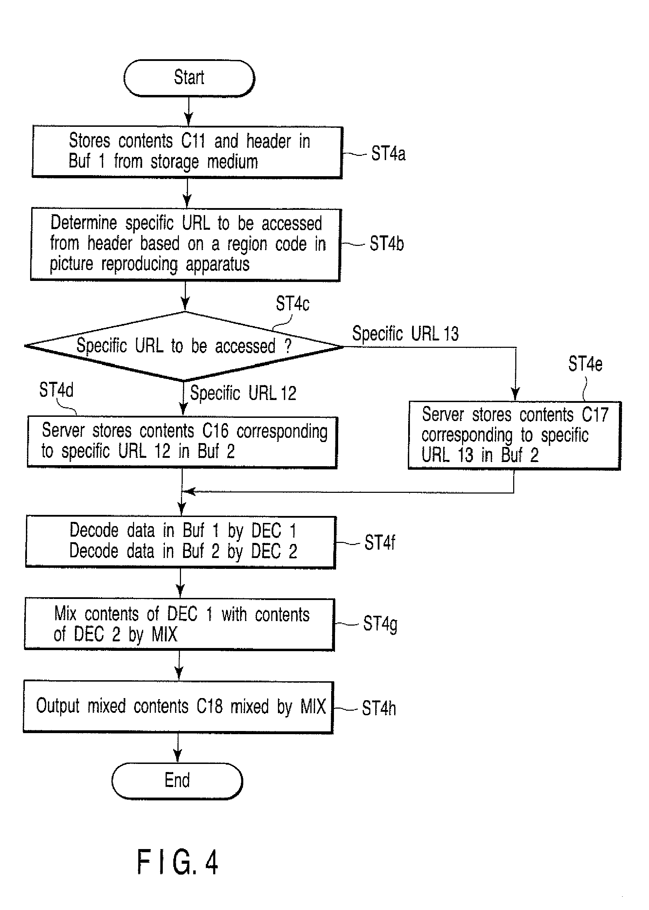

An operation of the thus configured network system will now be described. FIG. 4 is a flowchart showing an operation procedure and its contents of the picture reproducing apparatus 10B. Here, it is determined that the buffer 11 is Buf 1 and the buffer 14 is Buf 2.

First, picture contents C11 and a header are transferred to the buffer 11 in the picture reproducing apparatus 10B from the storage medium M in accordance with a request (step ST4a). In the header are written both the specific URL 12 and URL 13 as storage destinations for contents which must be reproduced together with the contents C11.

The microcomputer 16B in the picture reproducing apparatus 10B extracts the header stored in the buffer 11, compares the region codes 1 and 2 included in this header with the region code registered in the storage section 17, determines a URL required to access the server 30 based on a result of this comparison (step ST4b), and accesses the corresponding URL.

Here, when the URL 12 is selected as the specific URL, the microcomputer 16B jumps from step ST4c to step ST4d, and transmits a call signal for the server 30 to the network NW at this step. Furthermore, when a communication link is established between itself and the server 30 with respect to this calling, the microcomputer 16B transmits a contents acquisition request to the server 30 through this communication link. This acquisition request includes the URL 12 corresponding to the contents C16 which are desired to be acquired.

On the other hand, the server 30 transmits the contents C16 corresponding to the specific URL 12 to the picture reproducing apparatus 10B which has issued the request through the established communication link.

The picture reproducing apparatus 10B receives the contents C16 transmitted from the server 30, and stores the received contents in the buffer 14.

On the other hand, when the URL 13 is selected as the specific URL, the microcomputer 16B jumps from the step ST4c to step ST4e, transmits a call signal for the server 30 to the network NW at this step, and then transmits a contents acquisition request to the server 30. This acquisition request includes the URL 13 corresponding to the contents C17 which are desired to be acquired.

On the other hand, the server 30 transmits the contents C17 corresponding to the specific URL 13 to the picture reproducing apparatus 10B which has issued the request through the established communication link.

The picture reproducing apparatus 10B receives the contents C17 transmitted from the server 30, and stores the received contents in the buffer 14.

Furthermore, the microcomputer 16B in the picture reproducing apparatus 10B reads the picture contents C11 from the buffer 11 and inputs the read contents to a decoder 12 in order to decode them, and also reads the contents C16 or the contents C17 from the buffer 14 and inputs the read contents to a decoder 15 in order to decode them (step ST4f).

Thereafter, the picture reproducing apparatus 10B uses a mixer 13 to mix the contents decoded by the decoder 12 with the contents decoded by the decoder 15 (step ST4g), and reproduces and displays mixed contents C18 in a non-illustrated display (step ST4h). As a result, the picture reproducing apparatus 10B outputs the mixed contents C18 in which the contents C11 is mixed with the contents C16 including English sounds.

As described above, in the second embodiment, a region code of contents which are desired to be acquired by a user is previously registered in the storage section 17 of his/her picture reproducing apparatus 10B in advance, and the corresponding contents are acquired together with the registered region code from the server 30.

Therefore, for example, when a user wants to enjoy the contents C11 in the form of contents for the U.S. in Japan, the contents C16 for the U.S. can be automatically acquired from the server 30 based on the region code previously registered in the picture reproducing apparatus 10B.

### (Third Embodiment)

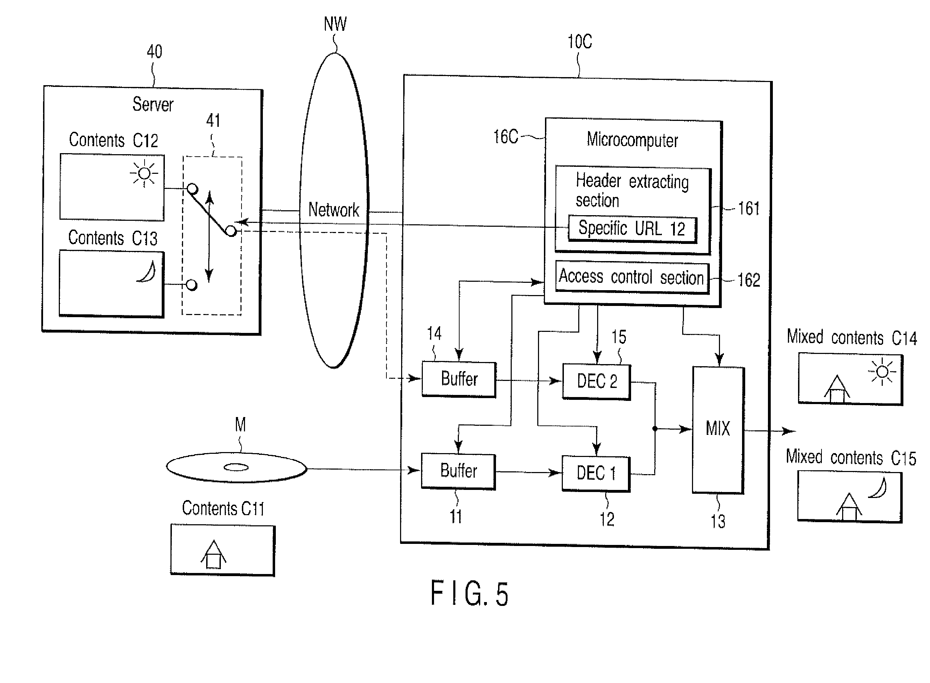

FIG. 5 is a block diagram showing a configuration of a network system in a third embodiment according to the present invention, in which reference numeral 10C denotes a picture reproducing apparatus and 40 designates a server. It is to be noted that like reference numerals denote parts equal to those in FIG. 1, thereby eliminating the detailed explanation.

The server 40 includes transmitting section 41. When a contents acquisition request arrives from the picture reproducing apparatus 10C through a network NW, the transmitting section 41 randomly selects contents C12 or C13, and transmits the selected contents C12 to the picture reproducing apparatus 10C which has issued the request.

As described above, since the server 40 selects the contents C12 or C13 in the third embodiment, a processing burden on the picture reproducing apparatus 10C can be suppressed, and a cost of the picture reproducing apparatus 10C can be thereby reduced. Moreover, since storing a representative URL 12 alone of the server 40 in a storage medium M can suffice, a capacity of the storage medium M can be thus reduced.

### (Other Embodiments)

The present invention is not restricted to the foregoing embodiments. For example, in the second embodiment, the description has been given as to the example where a region code is used to acquire desired contents from the server. However, the present invention is not restricted thereto, and it is possible to use a parental lock which restricts viewing in accordance with each program. By doing so, for example, when adults or children share one picture reproducing apparatus, contents to be provided can be restricted in accordance with age.

Additionally, a production number of the picture reproducing apparatus may be used for a judgment on contents acquisition conditions. By doing so, preferred services, e.g., presenting special contents depending on each production number can be provided to a user of the picture reproducing apparatus, thus increasing the number of purchasers of the picture reproducing apparatus.

Further, time information may be used for a judgment on contents acquisition conditions. By doing so, optimum contents can be acquired from the server in accordance with each data and hour, mixed with picture contents and then displayed. Furthermore, besides the time information, it is possible to use the number of times of access to the server, for example.

Furthermore, although the description has been given as to the example where there are two types of contents in the server in the foregoing embodiments, the present invention can be likewise carried out when there are three or more types of contents. In this case, it is good enough to include specific URLs, whose number is equal to that of contents existing in the server, in a header added to contents in the storage medium.

Moreover, although the description has been given on the example where a URL added to picture contents recorded in the storage medium is utilized to acquire contents from the server in the foregoing embodiments when a plurality of URLs are known on the picture reproducing apparatus side in advance, it is possible to use a URL meeting the conditions from the plurality of URLs in accordance with picture contents reproduced from the storage medium in order to access the server.

Additionally, although contents recorded in the storage medium are a target in the foregoing embodiments, contents transmitted through broadcasting waves or a network may be processed.

Further, although contents in the network are described as picture information or audio information in the foregoing embodiments, the present invention can be likewise carried out even if sub-pictures are substituted for contents.

Besides, the configuration of the network system, the configuration or the picture reproducing apparatus, a procedure and a method of determining contents to be acquired and others can be modified and carried out in many ways without departing from the scope of the present invention.

## Claims

1. A picture reproducing apparatus **characterized by** comprising:
a buffer (11) which temporarily holds picture contents input the apparatus (10A, 10B);
means (16A, 16B) for selecting one added contents from a plurality of different added contents concerning the picture contents held in the buffer (11) based on conditions preset in the apparatus, and acquiring the selected added contents; and
means (12, 13, 15) for mixing the acquired added contents with the picture contents held in the buffer (11), and reproducing the mixed contents as picture signals.

2. The picture reproducing apparatus according to claim 1, when a plurality of connection information required to acquire the plurality of added contents from a server apparatus (20, 30) are added to the picture contents,
**characterized in that** the means (16A, 16B) for acquiring accesses the server apparatus (20, 30) based on connection information corresponding to the added contents in accordance with the conditions from the plurality of connection information obtained from the picture contents held in the buffer (11), to acquire the added contents.

3. The picture reproducing apparatus according to claim 1, **characterized in that** the means (16A, 16B) for acquiring uses time information for a judgment on the conditions.

4. The picture reproducing apparatus according to claim 1, **characterized in that** the means (16A, 16B) for acquiring uses a region code indicative of a region where reproduction is possible for a judgment on the conditions.

5. The picture reproducing apparatus according to claim 1, **characterized in that** the means (16A, 16B) for acquiring uses a parental lock which restricts viewing in accordance with each program for a judgment on the conditions.

6. The picture reproducing apparatus according to claim 1, **characterized in that** the means (16A, 16B) for acquiring uses apparatus identifying information for a judgment on the conditions.

7. The picture reproducing apparatus according to claim 1, **characterized in that** the means (16A, 16B) for acquiring uses at least one of a random number generator and a microcomputer, to randomly acquire one set of added contents from the plurality of added contents.

8. A network system **characterized by** comprising:
a server apparatus (40); a picture reproducing apparatus (10e) which is connected with the server apparatus (40) through a network (NW), and reproduces picture contents to which connection information for the server apparatus (40) is added,
the picture reproducing apparatus (10C) including:
a buffer (11) which temporarily holds picture contents input the picture reproducing apparatus (10C);
means (16C) for extracting the connection information added to the picture contents held in the buffer (11), and accessing the server apparatus (40) based on the connection information; and
means (12, 13, 15) for mixing the picture contents held in the buffer (11) with added contents concerning the picture contents transmitted from the server apparatus (40), and reproducing the mixed contents as picture signals,
the server apparatus (40) including:
means (41) for transmitting added contents in accordance with preset conditions in a plurality of different added contents to the picture reproducing apparatus (10C) when it is accessed by the picture reproducing apparatus (10C).

9. A picture reproducing method **characterized by** comprising:
temporarily holding input picture contents in a buffer (11);
selecting one added contents from a plurality of different added contents concerning the picture contents held in the buffer (11) based on preset conditions, and acquiring the selected added contents; and
mixing the acquired added contents with the picture contents held in the buffer (11), and reproducing the mixed contents as picture signals.
